# EUROPEAN PATENT APPLICATION

(11) **EP 1 988 462 A1**
(43) Date of publication of application: **05.11.2008**
(21) Application number: 08153537.9
(22) Date of filing: 28.03.2008
(51) Int. Cl.: G06F 9/54

(54) **Communication terminal apparatus**

(30) Priority: 04.04.2007 JP 2007098246
(71) Applicant: NTT DoCoMo, Inc., Chiyoda-ku Tokyo 100-6150 (JP)
(72) Inventor: Kano, Izua, c/o NTT DoCoMo, Inc. Int.Prop.Dpt., Chiyoda-ku, Tokyo 100-6150 (JP); Yamada, Eiju, c/o NTT DoCoMo, Inc. Int.Prop.Dpt., Chiyoda-ku, Tokyo 100-6150 (JP); Yamada, Kazuhiro, c/o NTT DoCoMo, Inc. Int.Prop.Dpt., Chiyoda-ku, Tokyo 100-6150 (JP); Kamiya, Dai, c/o NTT DoCoMo, Inc. Int.Prop.Dpt., Chiyoda-ku, Tokyo 100-6150 (JP); Murakami, Keiichi, c/o NTT DoCoMo, Inc. Int.Prop.Dpt., Chiyoda-ku, Tokyo 100-6150 (JP); Onda, Yasushi, c/o NTT DoCoMo, Inc. Int.Prop.Dpt., Chiyoda-ku, Tokyo 100-6150 (JP); Kushida, Yusuke, c/o NTT DoCoMo, Inc. Int.Prop.Dpt., Chiyoda-ku, Tokyo 100-6150 (JP)
(74) Representative: Schwabe - Sandmair - Marx

(57) **Abstract**

A Java application is started, the started Java application instructs a Flash bridge section 16 to start a Flash file via an application managing section 15, and the Flash bridge section 16 transmits interaction information for causing the Flash file and the Java application to interact with each other while designating an application for the interaction to the application managing section 15.

## Description

The present disclosure relates to subject matters contained in Japanese Patent Application No.2007-098246 filed on April 4, 2007, which are expressly incorporated herein by reference in its entireties.

### BACKGROUND OF THE INVENTION

### 1. Field of the Invention

The present invention relates to a communication terminal apparatus for executing Java (Registered Trademark) applications and a content reproducing method using the apparatus.

### 2. Description of the Prior Art

With development of Web (World Wide Web) technique, service has been spread widely to download a programming language such as, for example, a Java application with less dependence on the model of device and operating system to use to a communication terminal apparatus from a Web server via a network such as the Internet and the like. A user of the communication terminal apparatus gains access to the Web server using the installed Web browser, and requests download of the application to the Web server, It is thus possible to download the user desired application to the communication terminal apparatus from the Web server (for example, Japanese Laid-Open Patent Publication No.2002-189600).

The communication terminal apparatus such as a cellular telephone or the like has the network function with limited connectivity, relatively low CPU, and limited memory capacity, and adopts a configuration supporting these characteristics. In other words, CLDC (Connected Limited Device Configuration) is adopted in such a device.

In the configuration adopting the aforementioned CLDC, for example, it is not possible to perform execution of a Java application and reproduction of a Flash file in interaction with each other. Accordingly, there is a problem that versatility of the user interface is small.

### SUMMARY OF THE INVENTION

It is an object of the invention to provide a communication terminal apparatus for performing execution of a Java application and reproduction of a Flash file in interaction with each other and thereby enhancing versatility of the user interface, and a content reproducing method using such an apparatus.

A communication terminal apparatus of the invention has an executing section that executes a Java application, a reproducing section that reproduces a Flash file, an application managing section that relays information on interaction in causing reproduction of the Flash file and execution of the Java application to interact with each other, and a bridge section that controls operation of causing reproduction of the Flash file and execution of the Java application to interact with each other.

According to this configuration, it is possible to perform reproduction of the Flash file and execution of the Java application in interaction with each other via the application managing section. It is thereby possible to enhance versatility of the user interface in the communication terminal apparatus.

In the communication terminal apparatus of the invention, it is preferable that as the information on interaction, the application managing section relays information for instructing to start the Flash file, and information for specifying a JAR file targeted for the interaction to the bridge section, and that corresponding to the information for instructing to start the Flash file, the bridge section makes the reproducing section reproduce the Flash file, while specifying the Java application for the interaction using the information for specifying the JAR file targeted for the interaction.

Particularly, in the communication terminal apparatus of the invention, it is preferable that as the information on interaction, the application managing section relays information for instructing to start the Flash file, and information of a storage area storing a JAR file targeted for the interaction to the bridge section, and that corresponding to the information for instructing to start the Flash file, the bridge section makes the reproducing section reproduce the Flash file, while specifying the Java application for the interaction using the information of the storage area storing the JAR file targeted for the interaction.

Further, in the communication terminal apparatus of the invention, the executing section and the reproducing section are preferably installed on the operating system.

In addition, in the communication terminal apparatus of the invention, the reproducing section may be installed on the executing section installed on the operating system.

In the communication terminal apparatus of the invention, the bridge section preferably includes a managing section that manages a life cycle of the file used in reproducing the Flash file.

A content reproducing method of the invention is a content reproducing method using a communication terminal apparatus having an application managing section that relays information on interaction in causing reproduction of a Flash file and execution of a Java application to interact with each other, and a bridge section that performs control to cause reproduction of the Flash file and execution of the Java application to interact with each other, and is characterized by having the steps of starting the Java application, instructing the bridge section to start the Flash file from the started Java application via the application managing section, and sending in the bridge section interaction information for causing the Flash file and the Java application to interact with each other while designating an application for the interaction to the application managing section.

According to this method, it is possible to perform execution of the Java application and reproduction of the Flash file in interaction with each other via the application managing section. It is thereby possible to enhance versatility of the user interface in the communication terminal apparatus.

### BRIEF DESCRIPTION OF THE DRAWINGS

The various features of novelty which characterize the invention are pointed out with particularity in the claims attached to and forming a part of this specification. For a better understanding of the invention, itsoperatingadvantages, and specific objects attained by its use, reference should be had to the accompanying drawing and descriptive matter in which there is illustrated and described a preferred embodiment of the invention.
FIG.1 is a diagram illustrating a schematic configuration of a system to achieve a content reproducing method according to an embodiment of the invention;
FIG.2 is a block diagram illustrating a configuration of a communication terminal apparatus according to the embodiment of the invention;
FIG.3 is a block diagram illustrating a configuration of a Flash bridge section of the communication terminal apparatus according to the embodiment of the invention;
FIG.4 is a sequence diagram in reproducing content using the communication terminal apparatus according to the embodiment of the invention;
FIG.5 is a diagram showing a table of a life cycle of a Flash file in the communication terminal apparatus according to the embodiment of the invention; and
FIG.6 is a block diagram illustrating another configuration of the communication terminal apparatus according to the embodiment of the invention.

### DESCRIPTION OF THE PREFERRED EMBODIMENTS

An embodiment of the present invention will specifically be described below with reference to accompanying drawings. In addition, the invention is explained while embodying a communication terminal apparatus and content reproducing method. However, the invention is not limited thereto, and is established as a program executed by a processor.

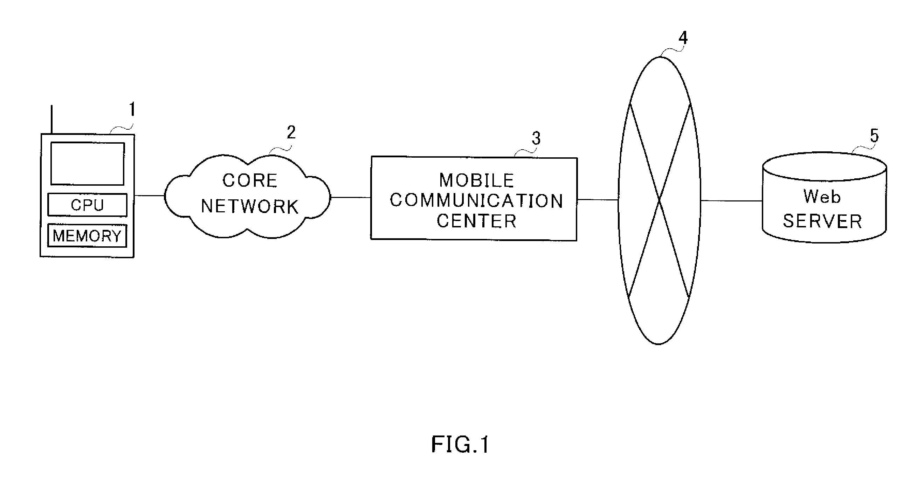

FIG.1 is a diagram illustrating a schematic configuration of a system to achieve a content reproducing method according to an embodiment of the invention. The system as shown in FIG.1 is principally comprised of a communication terminal apparatus 1 according to the invention, a mobile communication center 3 connected to the communication terminal apparatus 1 via a core network 2 that is a mobile communication network, and a Web server 5 connected to the mobile communication center 3 via a network such as the Internet 4.

The communication terminal apparatus 1 has an operating system (mobile device OS), and the browser function, viewer function and other functions operate on the mobile device OS. Further, the communication terminal apparatus 1 is capable of reproducing Flash files (contents). As shown in FIG.1, the communication terminal apparatus 1 has a CPU (Central Processing Unit) that controls the entire apparatus, and memory that stores programs that the CPU reads and executes to control the entire apparatus.

The core network 2 is a network between the communication terminal apparatus 1 and mobile communication center 3. The core network 2 includes a mobile packet communication network as well as normal mobile communication networks. The mobile communication center 3 is, for example, an i-mode (Registered Trademark) server, has gateway functions for connecting the core network 2 and Internet 4, and more specifically, has the information distribution function, mail transmission/reception function, mail storage function, contract client management function, information provider management function, and information fee charging function.

The network includes the Internet 4 and other networks such as, for example, LAN, WAN and the like. The Web server 5 is a server connected to the Internet 4, and distributes the Flash file and Java application.

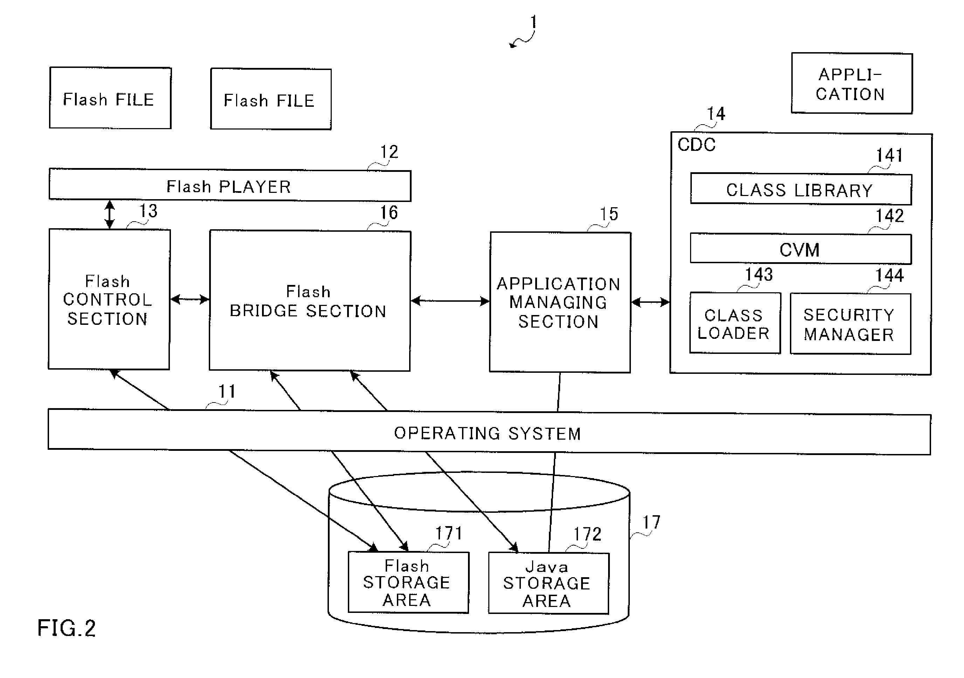

FIG.2 is a diagram illustrating architecture of the communication terminal apparatus used in the content reproducing method according to the embodiment of the invention. The architecture as shown in FIG.2 is implemented by the CPU of the communication terminal apparatus 1 executing the program stored in the memory. In addition, a storage section 17 as shown in FIG.2 is comprised of part of storage area in the memory of the communication terminal apparatus 1.

The communication terminal apparatus 1 has the operating system 11 as described above. On the operating system 11 operate a Flash player 12 that reproduces a Flash file, a Flash control section 13 that manages the operation of the Flash player 12, CDC (Connected Device Configuration) 14 that is a configuration of J2ME (Java (Registered Trademark) 2 Mobile Edition), JAM (Java Application Manager) that is an application managing section 15, and a Flash bridge section 16 as a bridge section that bridges between the Java application and the Flash file.

Further, the communication terminal apparatus 1 has a storage section 17. The storage section 17 includes a Flash storage area 171 that stores Flash files, and a Java storage area 172 that stores JAR files.

The Flash player 12 reproduces at least one Flash file according to control of the Flash control section 13. The Flash control section 13 is installed as part of the browser, and controls the operation of starting the Flash player 12, and the like. The Flash player 12 and Flash control section 13 function as a reproducing section that reproduces a Flash file, and are installed on the operating system 11.

The CDC 14 is the configuration of J2ME, and has functions of inputting and outputting an application file, network function, and security function. As shown in FIG.2, the CDC 14 has a class library 141, CVM (CDC Virtual Machine) 142, class loader 143, and security manager 144. The API (Application Program Interface) of the class library 141 is comprised of subset portion of the API included in minimum J2SE (Java (Registered Trademark) 2 Standard Edition) required to build the CVM 142 to execute. Further, the API of the class library 141 includes the API specific to J2ME as in CLDC (Connected Limited Device Configuration). The CVM 142 is a device to execute the API. The class loader 143 performs the processing (interaction edition) for concatenating a plurality of separate programs immediately before execution of the application file. The security manager 144 checks whether access is permitted when an application or the like gains the access to a resource to be protected. The CDC 14 functions as an executing section that executes the Java application, and is installed on the operating system 11.

The application managing section (Java Application Manager: JAM) 15 relays information such as a parameter and the like regarding the interaction in causing reproduction (Flash reproduction) of a Flash file and execution (application execution) of a Java application to interact with each other. Further, the application managing section 15 controls reading from ADF (Application Definition File) set on the application side.

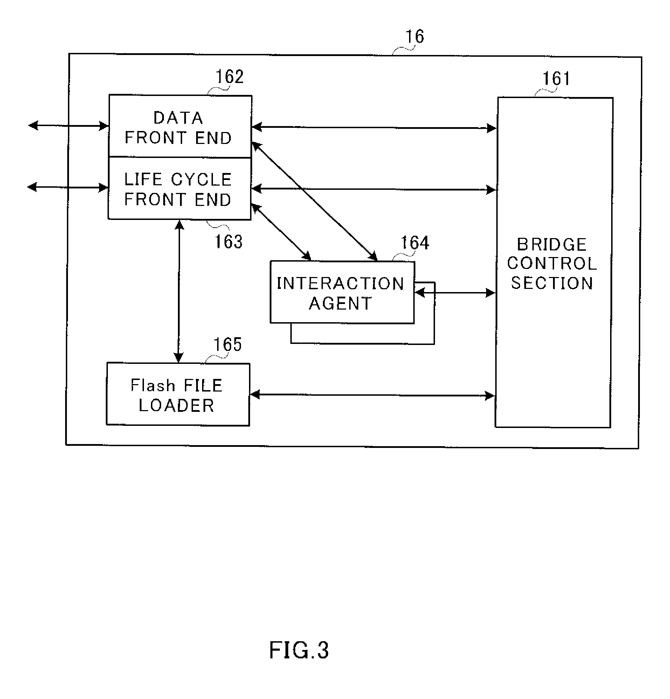

As shown in FIG.3, the Flash bridge section 16 has a bridge control section 161, data front end 162, life cycle front end 163, interaction agent 164, and Flash file loader 165. The Flash bridge section 16 is installed on the operating system 11.

The bridge control section 161 controls the operation of causing Flash reproduction and application execution to interact with each other. Further, the bridge control section 161 has an interface with the application managing section 15. The bridge control section 161 controls the interaction model and interaction permission on the application side in cooperation with the application managing section 15. Herein, the interaction model on the application side is an operating model for absorbing a difference between a Java application and Flash file with different operating environments. For example, a plurality of interaction models is prepared corresponding to types of Java applications and Flash files that can interact with each other. Further, the interaction permission on the application side is the processing for determining whether the interaction on the application side is permitted or not.

The data front end 162 performs transmission and reception of data to/from the Flash side and management of the data. The life cycle front end 163 manages the life cycle operation such as loading and abandoning of the Flash file and the like to instruct. In other words, the life cycle front end 163 functions as a managing section that manages a life cycle of the file used in reproducing the Flash file. The interaction agent 164 holds data of interaction between the Flash file and application and identifiers, and interfaces therebetween. In other words, the interaction agent 164 relays asynchronous data exchange in accordance with the operation on the Flash side, and performs control when the life cycle is not synchronized. The Flash file loader 165 performs acquisition of a Flash file, reservation of an area to load the Flash file, code base designation and the like in loading the Flash file.

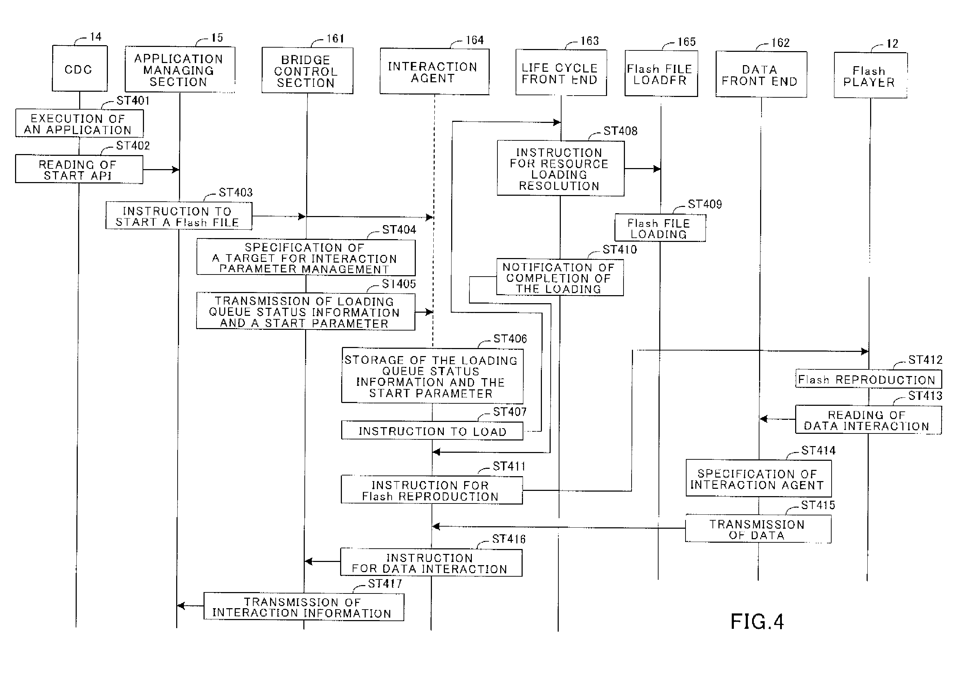

Described next is the case where content is reproduced using the communication terminal apparatus with the above-mentioned configuration. FIG.4 is a sequence diagram in reproducing content using the communication terminal apparatus according to this embodiment. In addition, in FIG.4, such processing is omitted that the communication terminal apparatus 1 acquires a Java application from the Web server 5. Further, explained herein is the case where for the life cycle of the Flash file, a user interface of Flash is also packaged in a single Java application.

In the content reproducing method of the invention, the Java application is started, the started Java application instructs the Flash bridge section 16 to start a Flash file via the application managing section 15, and the Flash bridge section 16 transmits interaction information for causing the Flash file and the Java application to interact with each other while designating an application for the interaction to the application managing section 15.

More specifically, the communication terminal 1 first acquires a Java application. In this case, the communication terminal apparatus 1 transmits an acquisition request for a page to acquire the Java application to the Web server 5 via the core network 2 and the Internet 4, and acquires the page. In this state, when the user operates the communication terminal apparatus 1, and inputs instructions to acquire the Java application described in the page, the communication terminal apparatus 1 transmits the acquisition request corresponding to the instructions to the Web server 5 via the core network 2 and the Internet 4, and acquires ADF of the Java application.

Next, the communication terminal apparatus 1 transmits an acquisition request for a JAR file corresponding to the ADF to the Web server 5 via the core network 2 and the Internet 4, and acquires the JAR file. Then, when the user operates the communication terminal apparatus 1 and instructs execution of the acquired Java application (program included in the JAR file), the communication terminal apparatus 1 executes the Java application. In executing the Java application in the communication terminal apparatus 1, as shown in FIG.4, the CDC 14 starts the CVM 142 and browser, and executes the Java application thereon (step (hereinafter, referred to as "ST") 401).

The start API of the Flash user interface is read from the Java application (ST402). This reading of start API is performed by the CDC 14 instructing the application managing section 15. Next, the application managing section 15 outputs instructions to start the Flash file to the bridge control section 161 of the Flash bridge section 16 (ST403). The instructions include a parameter (start parameter) to instruct to start the Flash file, and parameter (interaction target specifying parameter) to specify a JAR file targeted for the interaction, as parameters. The interaction target specifying parameter is managed in the bridge control section 161. In addition, the interaction target specifying parameter corresponds to, for example, a parameter (JAR file position parameter) for indicating a position in which the JAR file targeted for the interaction is stored in the Java storage area 172. Meanwhile, the parameter for specifying the JAR file targeted for the interaction is not limited thereto, and is capable of being modified as appropriate.

At this point, the Flash bridge section 16 generates the interaction agent 164 (ST404). When the interaction agent 164 is generated, the bridge control section 161 refers to the above-mentioned interaction model, and specifies information (loading queue status information) indicating standby time until the Flash file instructed to start is loaded. Then, the loading queue status information and the above-mentioned start parameter are delivered to the interaction agent 164 (ST405). These loading queue status information and start parameter are stored in the interaction agent 164 (ST406).

Then, according to the loading queue status information, the interaction agent 164 instructs the life cycle front end 163 to load the Flash file (ST407). Then, the life cycle front end 163 instructs resource loading resolution to the Flash file loader 165 (ST408). Then, corresponding to the instruction, the Flash loader 165 loads the Flash file (ST409).

When the Flash file loader 165 completes loading of the Flash file, the loader 165 notifies the life cycle front end 163 of the completion. Upon receiving the notification, the life cycle front end 163 notifies the interaction agent 164 of the loading completion of the Flash file (ST410). Then, the interaction agent 164 outputs the start parameter to the Flash player 12 via the life cycle front end 163 to instruct Flash reproduction (ST411). Upon receiving the instruction, the Flash player 12 performs Flash reproduction (ST412).

When Flash reproduction is performed in the Flash player 12, a call for data interaction is issued to the data front end 162 from the Flash file (ST413). Upon detecting the call for data interaction, the data front end 162 analyzes the call, and specifies an interaction agent 164 corresponding to the Flash file (ST414). Then, the data from the Flash file is output to the specified interaction agent 164 (ST415).

Upon receiving the data from the Flash file, the interaction agent 164 instructs the interaction of the data to the bridge control section 161 (ST416). Upon receiving this instruction, the bridge control section 161 outputs a parameter (interaction information) while specifying the Java application for the interaction to the application managing section 15 (ST417). At this point, for example, the above-mentioned JAR file position parameter is output. The application managing section 15 analyzes the JAR file position parameter, and is thereby capable of identifying the Java application targeted for the interaction. Thus, it is possible to interface between Flash reproduction and execution of Java application through the application managing section 15.

In addition, the application managing section 15 acquires synchronization with the life cycle of the Java application. Further, in the case of callback, the interactive agent 164 continues to wait until a timeout. Further, the data received in the application managing section 15 from the Java application is returned to the interactive agent 164 through the path opposite to the above-mentioned path.

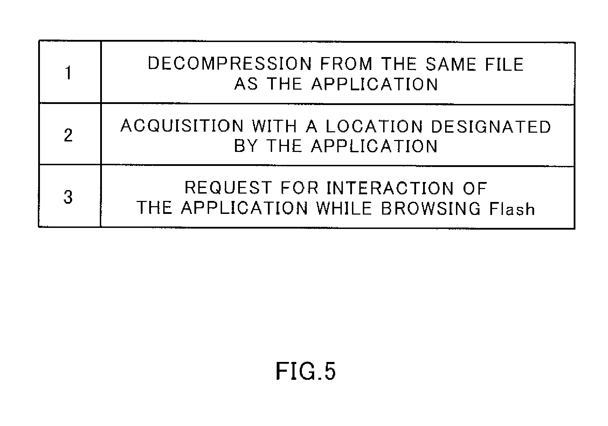

The Flash file which is instructed from the Java application and loaded is finished on the Flash player 12 concurrently with finish of the Java application. Then, the Flash file is deleted from the Flash storage area 171 of the storage section 17, and remains in the JAR file of the Java application as a loading source. Such a life cycle of the Flash file is managed in the Flash bridge section 16, for example, using a table as shown in FIG.5.

Thus, according to the communication terminal apparatus 1 according to this embodiment, it is possible to perform execution of the Java application and reproduction of the Flash file in interaction with each other through the application managing section 15. It is thereby possible to enhance versatility of the user interface in the communication terminal apparatus 1.

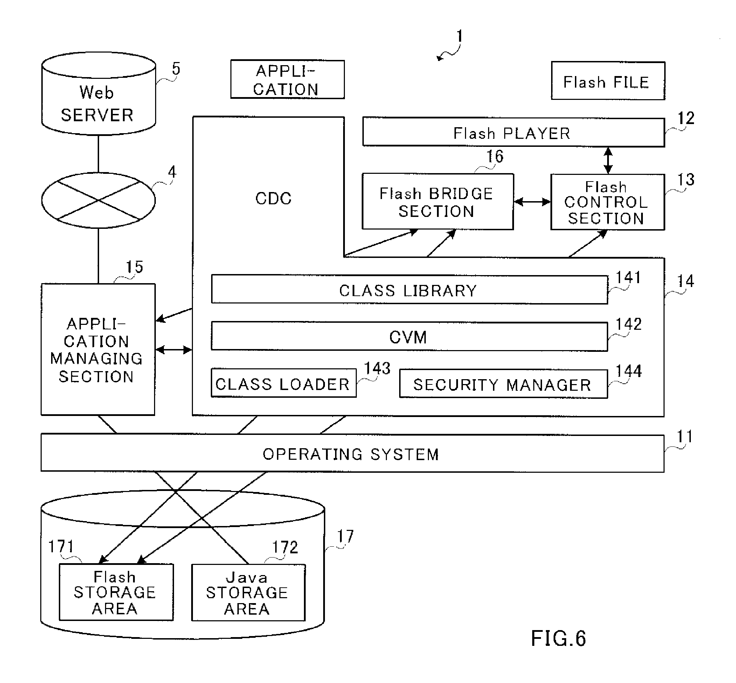

The invention is not limited to the above-mentioned embodiment, and is capable of being carried into practice with various modifications thereof. The above-mentioned embodiment describes the case where the CDC 14 that executes a Java application, Flash player that reproduces a Flash file and the like are installed on the operating system, but the invention is not limited thereto, and is applicable to other architecture. For example, as shown in FIG.6, the invention is applicable to the architecture where the Flash player and the like are installed on the CDC 14 installed on the operating system. By providing such a configuration, it is possible to cause the Flash file to coexist completely on the Java application. Further, the invention is capable of being modified as appropriate without departing from the scope of the object of the invention.

## Claims

1. A communication terminal apparatus(1) comprising:
an executing section(14) that executes a Java application;
a reproducing section(12,13) that reproduces a Flash file;
an application managing section(15) that relays information on interaction in causing reproduction of the Flash file and execution of the Java application to interact with each other; and
a bridge section(16) that controls operation of causing reproduction of the Flash file and execution of the Java application to interact with each other.

2. The communication terminal apparatus(1) according to claim 1, wherein as the information on interaction, the application managing section(15) relays information for instructing to start the Flash file, and information for specifying a JAR file targeted for the interaction to the bridge section(16), and
corresponding to the information for instructing to start the Flash file, the bridge section(16) makes the reproducing section (12, 13) reproduce the Flash file, while specifying the Java application for the interaction using the information for specifying the JAR file targeted for the interaction.

3. The communication terminal apparatus(1) according to claim 1, wherein as the information on interaction, the application managing section (15) relays information for instructing to start the Flash file, and information of a storage area storing a JAR file targeted for the interaction to the bridge section(16), and
corresponding to the information for instructing to start the Flash file, the bridge section(16) makes the reproducing section(12, 13) reproduce the Flash file, while specifying the Java application for the interaction using the information of the storage area storing the JAR file targeted for the interaction.

4. The communication terminal apparatus(1) according to claim 1, wherein the executing section(14) and the reproducing section(12,13) are installed on the operating system.

5. The communication terminal apparatus (1) according to claim 1, wherein the reproducing section(12,13) is installed on the executing section(14) installed on the operating system.

6. The communication terminal apparatus (1) according to claim 1, wherein the bridge section(16) includes a managing section (163) that manages a life cycle of the file used in reproducing the Flash file.

7. A content reproducing method using a communication terminal apparatus(1) having an application managing section(15) that relays information on interaction in causing reproduction of a Flash file and execution of a Java application to interact with each other, and a bridge section(16) that performs control to cause reproduction of the Flash file and execution of the Java application to interact with each other, comprising the steps of:
starting the Java application;
instructing the bridge section(16) to start the Flash file from the started Java application via the application managing section(15); and
sending in the bridge section interaction information for causing the Flash file and the Java application to interact with each other while designating an application for the interaction to the application managing section.
